(19) Europäisches Patentamt
European Patent Office
Office européen des brevets

(11) EP 0 885 264 B1

(12) **EUROPÄISCHE PATENTSCHRIFT**

(45) Veröffentlichungstag und Bekanntmachung des Hinweises auf die Patenterteilung:
**17.04.2002 Patentblatt 2002/16**

(21) Anmeldenummer: **97901579.9**

(22) Anmeldetag: **22.01.1997**

(51) Int Cl.[7]: **C09B 67/42**, C09B 67/02, C09K 19/00, C09K 19/52

(86) Internationale Anmeldenummer:
**PCT/EP97/00278**

(87) Internationale Veröffentlichungsnummer:
**WO 97/27252 (31.07.1997 Gazette 1997/33)**

# (54) VERFAHREN ZUR HERSTELLUNG VON PIGMENTEN

METHOD OF PRODUCING PIGMENTS

PROCEDE DE PRODUCTION DE PIGMENTS

(84) Benannte Vertragsstaaten:
**AT BE CH DE DK ES FI FR GB GR IE IT LI LU MC NL PT SE**

(30) Priorität: **26.01.1996 DE 19602848**

(43) Veröffentlichungstag der Anmeldung:
**23.12.1998 Patentblatt 1998/52**

(73) Patentinhaber: **BASF AKTIENGESELLSCHAFT**
**67056 Ludwigshafen (DE)**

(72) Erfinder:
- **SCHUHMACHER, Peter**
  **D-68163 Mannheim (DE)**
- **SIEMENSMEYER, Karl**
  **D-67227 Frankenthal (DE)**
- **GONZALEZ GOMEZ, Juan, Antonio**
  **D-67063 Ludwigshafen (DE)**
- **SCHNEIDER, Norbert**
  **D-67122 Altrip (DE)**

(56) Entgegenhaltungen:
**EP-A- 0 724 005**
**EP-A- 0 727 472**
**WO-A-95/29962**
**WO-A-95/32247**
**WO-A-96/02597**
**DE-A- 4 240 743**
**DE-A- 4 418 076**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 885 264 B1

Printed by Jouve, 75001 PARIS (FR)

## Beschreibung

Gegenstand der vorliegenden Erfindung ist ein Verfahren zur Herstellung von Pigmenten durch Auftragen einer polymerisierbaren Mischung auf eine Oberfläche, Orientierung der in der Mischung enthaltenen Flüssigkristalle, Polymerisation der Mischung, Ablösen des Polymerfilms von der Oberfläche und Zerkleinern des Polymerfilms zu Pigmentpartikeln, dadurch gekennzeichnet, daß die polymerisierbare Mischung folgende Komponenten enthält:

$a_{1)}$ mindestens ein chirales flüssigkristallines polymerisierbares Monomeres oder

$a_{2)}$ mindestens ein achirales flüssigkristallines polymerisierbares Monomeres und eine chirale Verbindung und zusätzlich

b) ein polymeres Bindemittel und/oder monomere Verbindungen, die durch Polymerisation in ein polymeres Bindemittel überführt werden und/oder ein Dispergierhilfsmittel.

Weiterhin betrifft die vorliegende Erfindung Pigmente, erhältlich nach diesem Verfahren, Überzugsmittel, die diese Pigmente enthalten, die Verwendung der Pigmente in Lacken und Dispersionsfarben, die Verwendung der die Pigmente enthaltenen Überzugsmittel zur Lackierung von Gebrauchsgegenständen, besonders von Fahrzeugen, sowie Fahrzeuge, welche mit diesen Überzugsmitteln lackiert sind.

Pigmente mit cholesterisch-flüssigkristalliner Ordnungsstruktur sind interessante Effektpigmente, da sie einen vom Betrachtungswinkel abhängigen Farbeindruck aufweisen. Der Farbeindruck entsteht durch Interferenzeffekte an einer helikalen Überstruktur, die ein wesentliches Merkmal der cholesterisch-flüssigkristallinen Phase darstellt.

Pigmente mit vom Betrachtungswinkel abhängiger Farbigkeit, die aus orientierten dreidimensional vernetzten Substanzen mit flüssigkristalliner Struktur mit chiraler Phase sowie gegebenenfalls weiteren Farbstoffen und Pigmenten bestehen, sind aus EP-B1-0 601 483 bekannt. Die Farbbrillanz dieser Pigmente läßt jedoch noch zu wünschen übrig.

In der deutschen Patentanmeldung 19 532 419 wird ein Verfahren zur oberflächlichen Beschichtung von Substraten beschrieben, wobei das Beschichtungsmittel flüssigkristalline, polymerisierbare Monomere, gegebenenfalls chirale Verbindungen, welche eine cholesterische Ordnungsstruktur hervorrufen sowie zusätzlich ein polymeres Bindemittel und/oder monomere Verbindungen, die durch Polymerisation in das polymere Bindemittel überführt werden können oder ein Dispergierhilfsmittel enthält. Diese polymeren Bindemittel und Dispergierhilfsmittel erleichtern die Orientierung der flüssigkristallinen Verbindungen und ermöglichen eine spontane Orientierung zur cholesterisch-flüssigkristallinen Phase allein durch den Beschichtungsvorgang.

Die ältere europäische Patentanmeldung 0 724 005 betrifft ein Pigment mit vom Betrachtungswinkel abhängiger Farbigkeit, das durch dreidimensionales Vernetzen von orientierten Substanzen flüssigkristalliner Struktur mit chiraler Phase erhalten worden ist. Um ein solches Pigment farbhaltig gegenüber erhöhten Temperaturen zu machen, wird vorgeschlagen, daß das Vernetzen in Gegenwart von zumindest einer weiteren, zumindest zwei vernetzbare Doppelbindungen enthaltenden, farbneutralen Verbindungen durchgeführt worden ist.

Aufgabe der vorliegenden Erfindung war es, ein Verfahren zur Herstellung von Pigmenten mit vom Betrachtungswinkel abhängiger Farbigkeit zu finden, welches zu Pigmenten besonderer Farbbrillanz führt.

Demgemäß wurde das eingangs beschriebene Verfahren zur Herstellung von Pigmenten gefunden.

Das erfindungsgemäße Verfahren geht von einer polymerisierbaren Mischung aus. Polymerisierbar heißt hier, daß die in der Mischung enthaltenen Monomeren durch verschiedene Aufbaureaktionen, z.B. Additionspolymerisation als Kettenreaktion, Additionspolymerisation als Stufenreaktion oder Kondensationspolymerisationen in Polymere überführt werden können.

Zunächst wird die polymerisierbare Mischung auf eine Oberfläche, vorzugsweise eine Folie oder eine drehbare Walze, aufgetragen. Der Auftrag geschieht vorzugsweise in einer dünnen Schicht mit einer Dicke zwischen 1 und 100 µm. Durch diese Schichtdicke wird die maximale Dicke der Pigmente beim späteren Mahlvorgang festgelegt und außerdem das Zermahlen der Schicht zu plättchenförmigen Pigmenten erleichtert. Diese plättchenförmigen Pigmente können sich in dünnen Lackschichten gleichförmig anordnen, so daß ein gleichmäßiger Farbeindruck entsteht.

Flüssigkristalle mit verdrillten, cholesterischen Phasen bilden ihre optischen Eigenschaften erst dann aus, wenn sich die einzelnen Moleküle in einer helixartigen Überstruktur ausrichten. Die Ausbildung dieser Überstruktur tritt teilweise spontan auf, teilweise muß die Orientierung durch Einwirkung äußerer Kräfte hervorgerufen werden.

Nach dem Auftrag werden die flüssigkristallinen Verbindungen daher in der Schicht orientiert. Dies geschieht am einfachsten durch die beim Auftrag wirkenden Scherkräfte. Die Orientierung kann jedoch auch durch andere bekannte Methoden wie Rakeln, Orientierungsschichten oder, bei einigen flüssigkristallinen Systemen, durch elektrische oder magnetische Felder erfolgen.

Nach der Orientierung wird der erzielte flüssigkristalline Ordnungszustand durch Polymerisation fixiert. Besonders günstig sind dabei licht- oder elektronenstrahlinduzierte Polymerisationen, da sie unabhängig von der Temperatur vorgenommen werden können. Die Temperatur ist nämlich ein nicht unwesentlicher Parameter für die Helixganghohe des Flüssigkristalls und damit für die Farbe des Interferenzeffektes und sollte daher vorteilhaft als Farbgestaltungsparameter nicht durch die Polymerisationsbedingungen eingeschränkt werden.

Nach der Polymerisation wird die gehärtete Flüssigkristallschicht von der Oberfläche abgelöst und durch bekannte Methoden bis zur gewünschten Pigmentpartikelgröße zerkleinert.

In dem erfindungsgemäßen Verfahren enthält die polymerisierbare Mischung neben den flüssigkristallinen monomeren Verbindungen und gegebenenfalls chiralen Dotierstoffen ein polymeres Bindemittel und/oder monomere Verbindungen, die durch Polymerisation in ein polymeres Bindemittel überführt werden können und/oder ein Dispergierhilfsmittel. Diese Mittel erhöhen schon in geringen Mengen die Fließviskosität der Flüssigkristallphase und erleichtern wesentlich die Orientierung der Flüssigkristallmoleküle. Durch die erleichterte Orientierung werden aufwendige Orientierungsmethoden entbehrlich, die Orientierung tritt meist spontan durch den Beschichtungsvorgang auf. Außerdem wird eine gleichmäßigere Orientierung erreicht, was sich in erhöhter Farbbrillanz der Schichten und der Pigmente äußert.

Als polymere Bindemittel eignen sich z.B. in organischen Lösungsmitteln lösliche Polyester, Celluloseester, Polyurethane, Silikone sowie polyether- oder polyestermodifizierte Silikone. Besonders bevorzugt werden Celluloseester wie Celluloseacetobutyrat eingesetzt. Schon geringe Mengen solcher Substanzen - meist schon 0,1 bis 1 Gew.-% - bewirken eine beträchtliche Verbesserung der Fließviskositat. Gleichzeitig haben diese Mittel einen großen Einfluß auf die mechanischen Eigenschaften der gehärteten Pigmentpartikel.

Besonders geeignet sind auch solche polymeren Bindemittel, die reaktive vernetzungsfähige Gruppen wie Acryl-, Methacryl-, α-Chloracryl-, Vinyl-, Vinylether-, Epoxid-, Cyanat-, Isocyanatoder Isothiocyanatgruppen enthalten. Auch monomere Mittel eignen sich als Bindemittel, besonders die in der Lackherstellung bekannten sogenannten Reaktivverdünner, wie beispielsweise Hexandioldiacrylat oder Bisphenol-A-diacrylat.

Auch Dispergierhilfsmittel haben einen positiven Einfluß auf die Fließviskosität der polymerisierbaren Mischung, auf die Mischbarkeit der einzelnen Mischungskomponenten sowie auf die Orientierung der Flüssigkristalle. Als Dispergierhilfsmittel können alle handelsüblichen Mittel eingesetzt werden.

Besonders geeignete Dispergierhilfsmittel sind solche, die auf einer Bernsteinsäureimid-, -ester- oder -anhydridstruktur basieren, wie sie in der älteren deutschen Patentanmeldung 19 432 419.6 beschrieben sind.

Von diesen Dispergierhilfsmitteln sind Derivate der Polyisobutylenbernsteinsäure besonders bevorzugt.

Die polymerisierbare Mischung kann als cholesterisch-flüssigkristalline Komponente entweder

$a_{1)}$ mindestens ein chirales flüssigkristallines polymerisierbares Monomeres oder

$a_{2)}$ mindestens ein achirales flüssigkristallines polymerisierbares Monomeres und eine chirale Verbindung

enthalten. Als Komponente $a_{1)}$ enthält die polymerisierbare Mischung bevorzugt Monomere der allgemeinen Formel I

$$\left[Z^1-Y^1-A^1-Y^2-M^1-Y^3-\right]_n X \qquad \mathrm{I}$$

in der die Variablen die folgende Bedeutung haben:

| | |
|---|---|
| $Z^1$ | eine polymerisierbare Gruppe oder ein Rest, der eine polymerisierbare Gruppe trägt, |
| $Y^1,Y^2,Y^3$ | chemische Bindungen, Sauerstoff, Schwefel, |

$$-CO-O-,\ -O-CO-,\ -O-CO-O-,$$

$$-CO-N(R)-\ \text{oder}\ -N(R)-CO-\ ,$$

| | |
|---|---|
| $A^1$ | ein Spacer, |
| $M^1$ | eine mesogene Gruppe, |

X ein n-wertiger chiraler Rest,

R Wasserstoff oder $C_1$-$C_4$-Alkyl,

n 1 bis 6

wobei die Reste $Z^1$, $Y^1$, $Y^2$, $Y^3$, $A^1$ und $M^1$, gleich oder verschieden sein können.

Bevorzugte Reste $Z^1$ sind:

$$CH_2 = CH- , CH \equiv C- ,$$

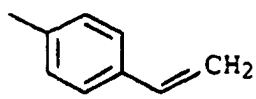 , 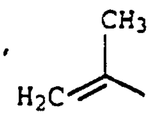 , 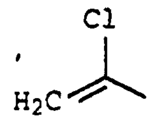 ,

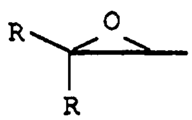 , 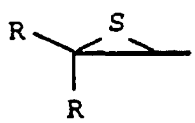 , 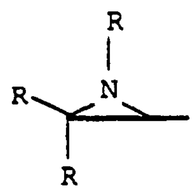 , 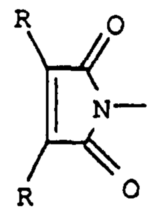

$$-N=C=O, -N=C=S, -O-C\equiv N,$$

$$-COOH, -OH \text{ oder} -NH_2,$$

wobei die Reste R gleich oder verschieden sein können und Wasserstoff oder $C_1$-$C_4$-Alkyl, also z.B. Methyl, Ethyl, n-Propyl, isoPropyl, n-Butyl, iso-Butyl, sec.-Butyl oder tert.-Butyl bedeuten. Von den reaktiven polymerisierbaren Gruppen konnen die Cyanate spontan zu Cyanuraten trimerisieren und sind daher bevorzugt zu nennen. Die anderen genannten Gruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimidogruppe eignet sich besonders zur radikalischen Copolymerisation mit olefinischen Verbindungen wie Styrol. Die komplementären reaktiven Gruppen können dabei entweder in einer zweiten erfindungsgemäßen Verbindung vorhanden sein, die mit der ersteren gemischt wird, oder sie können durch Hilfsverbindungen, die 2 oder mehr dieser komplementären Gruppen enthalten, in das polymere Netzwerk eingebaut werden.

Besonders bevorzugte Gruppierungen $Z^1$-$Y^1$ sind Acrylat und Methacrylat.

$Y^1$-$Y^3$ können die oben genannten Bedeutungen haben, wobei unter einer chemischen Bindung eine kovalente Einfachbindung verstanden werden soll.

Als Spacer $A^1$ kommen alle für diesen Zweck bekannten Gruppen in Betracht. Die Spacer enthalten in der Regel 2 bis 30, vorzugsweise 2 bis 12 C-Atome und bestehen aus linearen aliphatischen Gruppen. Sie konnen in der Kette z.B. durch O, S, NH oder $NCH_3$ unterbrochen sein, wobei diese Gruppen nicht benachbart sein dürfen. Als Substituenten für die Spacerkette kommen dabei noch Fluor, Chlor, Brom, Cyan, Methyl oder Ethyl in Betracht.

Repräsentative Spacer sind beispielsweise:

$$-(CH_2)_p-, -(CH_2CH_2O)_mCH_2CH_2-, -CH_2CH_2SCH_2CH_2-, -CH_2CH_2NHCH_2CH_2-,$$

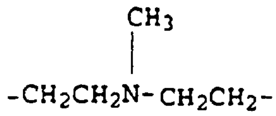 , 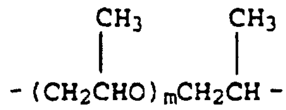 , 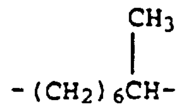 oder 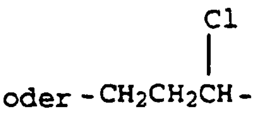 ,

wobei

m 1 bis 3 und
p 1 bis 12 sind.

Die mesogene Gruppe $M^1$ hat vorzugsweise die Struktur

$$(T\text{-}Y^8)_s\text{-}T$$

wobei $Y^8$ ein Brückenglied gemäß einer der Definitionen von $Y^1$, s eine Zahl von 1 bis 3 und T gleiche oder verschiedene zweiwertige isocycloaliphatische, heterocycloaliphatische, isoaromatische oder heteroaromatische Reste bedeuten.

Die Reste T können auch durch Fluor, Chlor, Brom, Cyan, Hydroxy oder Nitro substituierte Ringsysteme sein. Bevorzugte Reste T sind:

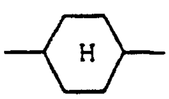 , 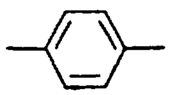 , 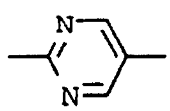 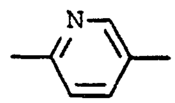 ,

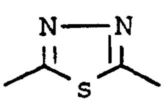 , 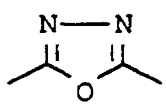 , 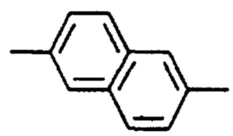 ,

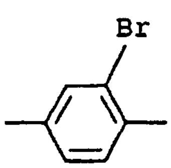 , 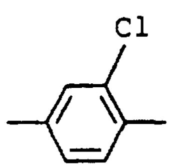 , 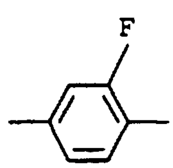 , 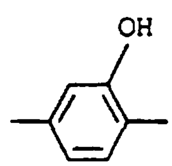 , 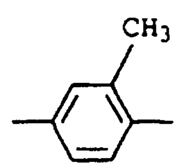 ,

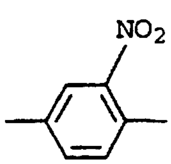 , 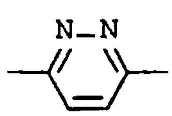 und 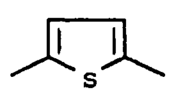 .

Besonders bevorzugt sind die folgenden mesogenen Gruppen $M^1$:

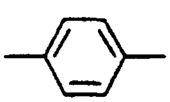 , 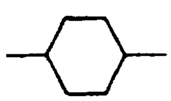 , 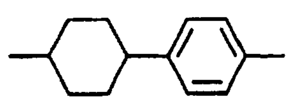 , 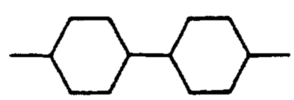 ,

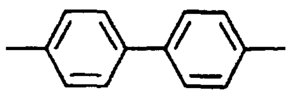 , 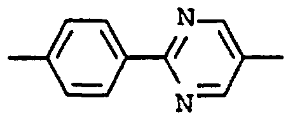 , 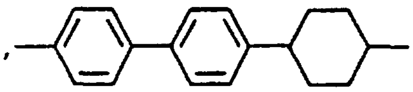 ,

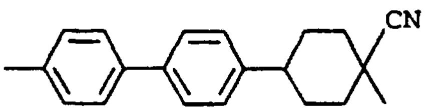 , 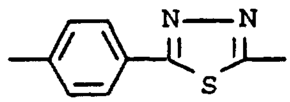 ,

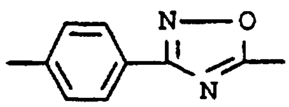 , 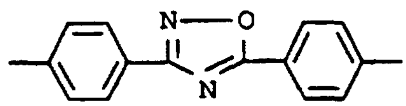 ,

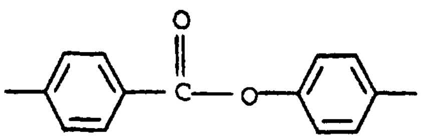 , 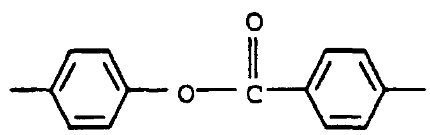 ,

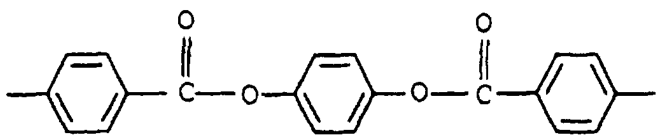 ,

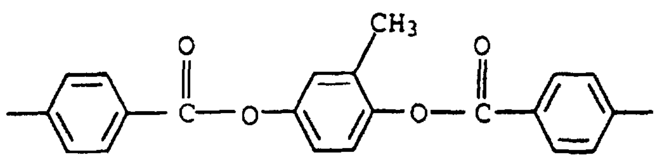 ,

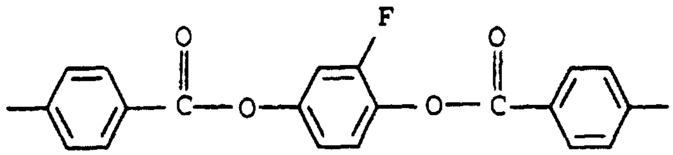,

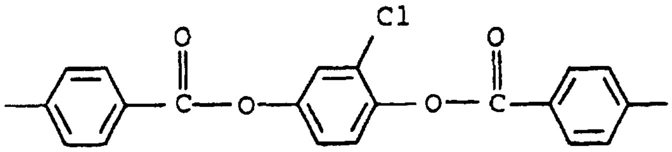,

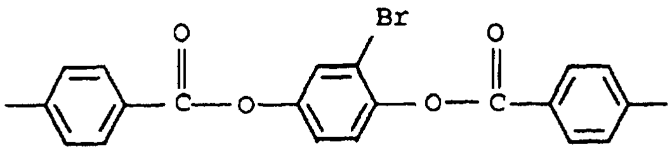,

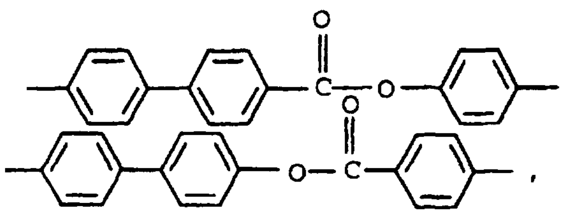, , 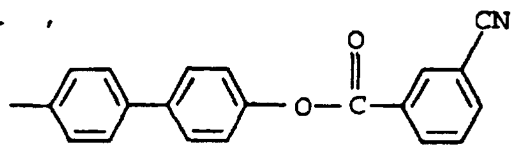,

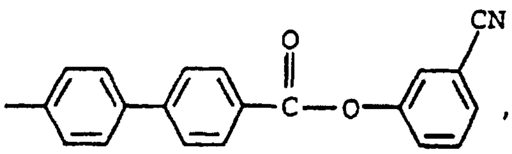, 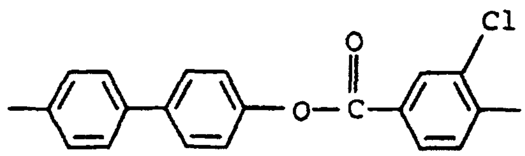,

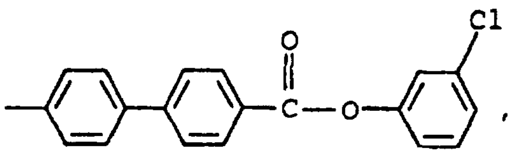, 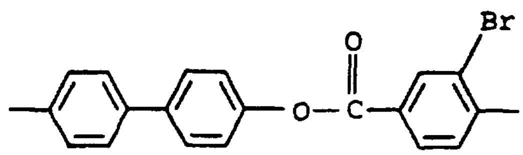,

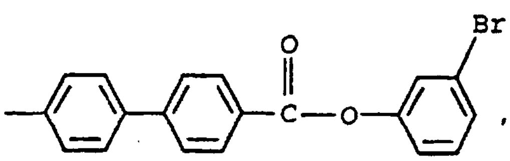, 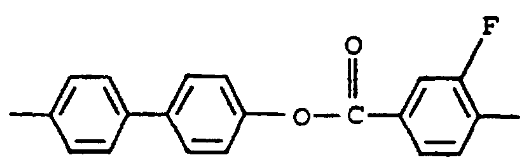.

Von den chiralen Resten X der Verbindungen der allgemeinen Formel I sind u.a. aufgrund der Verfügbarkeit insbesondere solche bevorzugt, die sich von Zuckern, Binaphthyl- oder Biphenylderivaten sowie optisch aktiven Glykolen, Dialkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten.

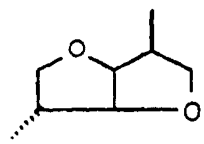
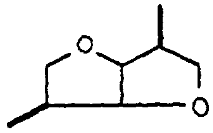
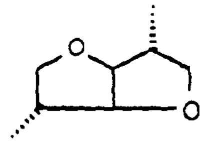

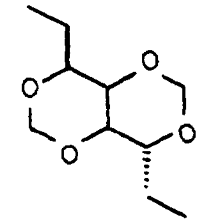
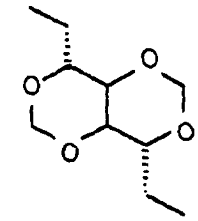

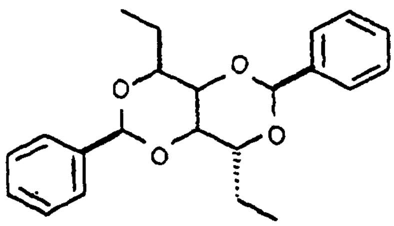
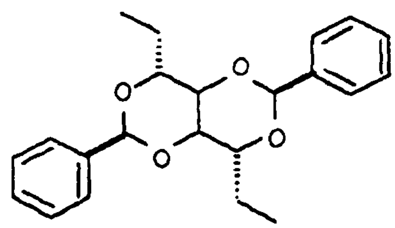

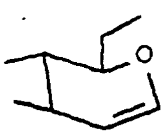
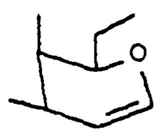
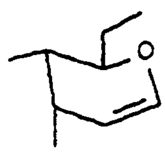
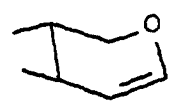

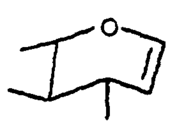
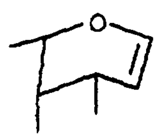
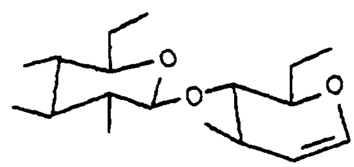

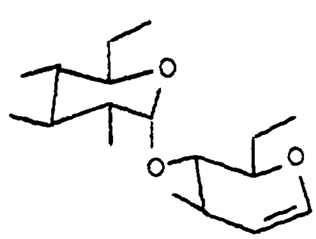
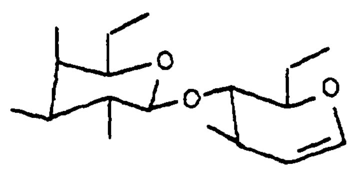

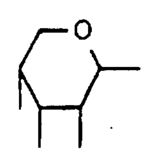
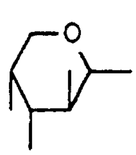
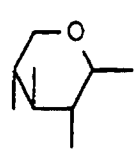
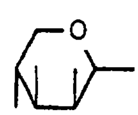

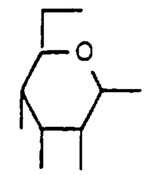 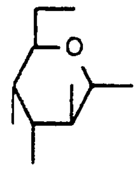 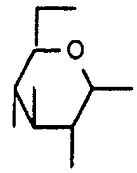 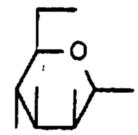

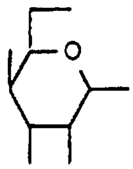 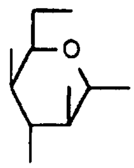 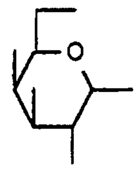 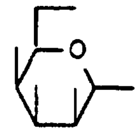

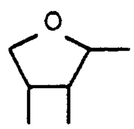 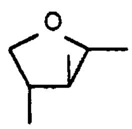 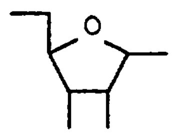 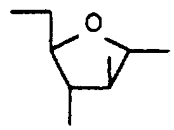 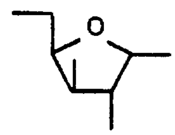

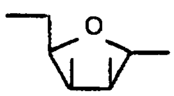 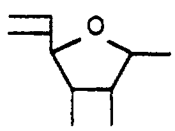 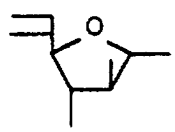 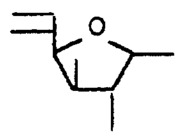 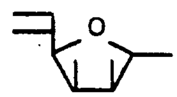

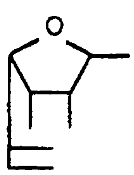 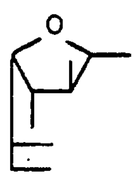 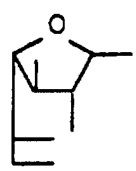 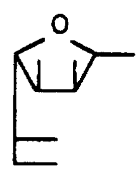

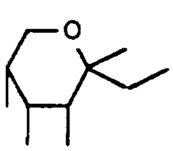 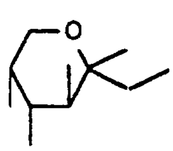 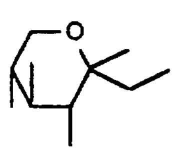 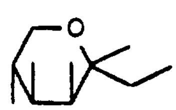 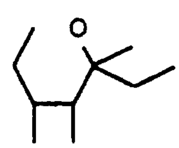

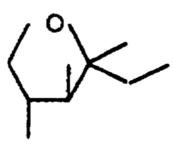 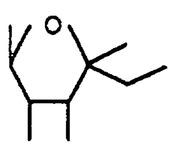 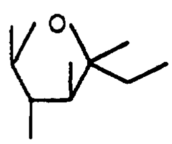 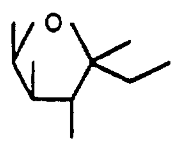 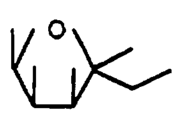

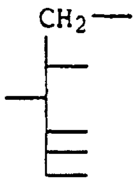 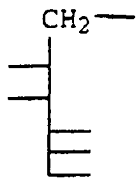 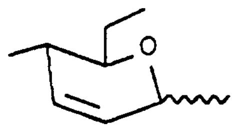 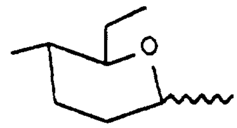

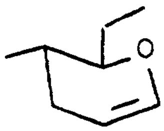 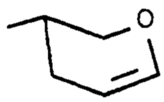 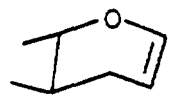 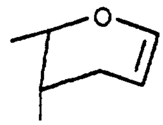

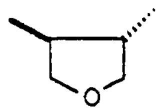

Besonders bevorzugt sind

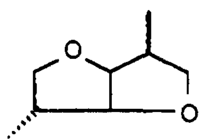 , 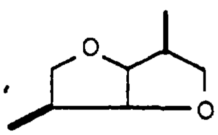 , 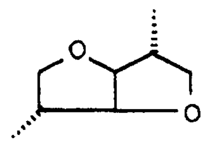 ,

und

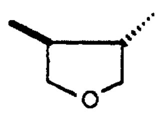 ,

Weiterhin sind auch chirale Gruppen geeignet, die folgende Strukturen aufweisen:

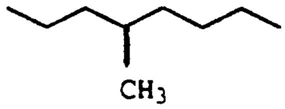 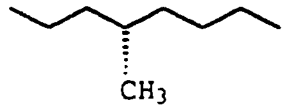 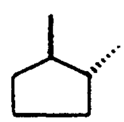

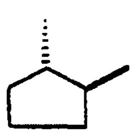 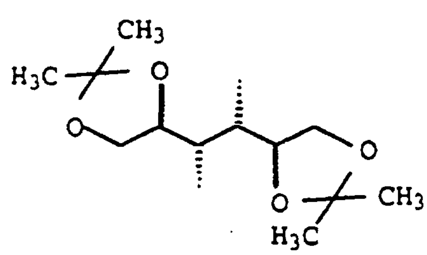

Weitere Beispiele sind in der deutschen Anmeldung P 43 42 280.2 aufgeführt.

n ist bevorzugt 2.

Als Komponente $a_{2)}$ enthält die polymerisierbare Mischung im erfindungsgemäßen Verfahren vorzugsweise mindestens ein achirales flüssigkristallines polymerisierbares Monomeres der allgemeinen Formel II

$$Z^2—Y^4—A^2—Y^5—M^2—Y^6—A^3—Y^7—Z^3 \qquad II$$

in der die Variablen die folgende Bedeutung haben:

$Z^2$,$Z^3$ polymerisierbare Gruppen oder Reste, die eine polymerisierbare Gruppe enthalten

$Y^4$,$Y^5$,$Y^6$,$Y^7$ chemische Bindungen, Sauerstoff, Schwefel,

$$—CO—O—, —O—CO—, —O—CO—O—,$$

$$—CO—N(R)— \text{ oder } —N(R)—CO— ,$$

$A^2$,$A^3$ Spacer und

$M^2$ eine mesogene Gruppe.

Dabei gelten für die polymerisierbaren Gruppen, die Brückenglieder $Y^4$ bis $Y^7$, die Spacer und die mesogene Gruppe die gleichen Bevorzugungen wie für die entsprechenden Variablen der allgemeinen Formel I.

Außerdem enthält die Komponente $a_{2)}$ eine chirale Verbindung. Die chirale Verbindung bewirkt die Verdrillung der achiralen flüssigkristallinen Phase zu einer cholesterischen Phase. Dabei hängt das Ausmaß der Verdrillung von der verdrillungsfähigkeit des chiralen Dotierstoffs und von seiner Konzentration ab. Damit hangt also die Ganghöhe der Helix und wiederum auch die Interferenzfarbe von der Konzentration des chiralen Dotierstoffs ab. Es kann daher für den Dotierstoff kein allgemeingültiger Konzentrationsbereich angegeben werden. Der Dotierstoff wird in der Menge zugegeben, bei der der gewünschte Farbeffekt entsteht.

Bevorzugte chirale Verbindungen sind solche der Formel Ia

$$\left[Z^1—Y^1—A^1—Y^2—M^a—Y^3—\right]_n X \qquad Ia,$$

in der $Z^1$, $Y^1$, $Y^2$, $Y^3$, $A^1$, X und n die obengenannten Bedeutung haben und $M^a$ ein zweiwertiger Rest ist, der mindestens ein heterooder isocyclisches Ringsystem enthält.

Der Molekülteil $M^a$ ähnelt dabei den beschriebenen mesogenen Gruppen, da auf diese Weise eine besonders gute Kompatibilität mit der flüssigkristallinen Verbindung erreicht wird. $M^a$ muß jedoch nicht eigentlich mesogen sein, da die Verbindung Ia lediglich durch ihre chirale Struktur eine entsprechende Verdrillung der flüssigkristallinen Phase bewirken soll. Bevorzugte Ringsysteme, die in $M^a$ enthalten sind, sind die oben erwahnten Strukturen T, bevorzugte Strukturen $M^a$ solche der oben genannten Formel $(T\text{-}Y^8)_s\text{-}T$.

Die erfindungsgemäß hergestellten Pigmente weisen bezüglich ihrer Farbbrillanz besondere Eigenschaften auf. Als erfindungsgemaß werden daher alle derartigen Pigmente betrachtet, wie sie nach dem beschriebenen Verfahren erhältlich sind.

Ein weiterer Vorteil der erfindungsgemäßen Pigmente ist ihre engere Größenverteilung. Beim Auftragen der polymerisierbaren Mischungen auf eine Oberfläche entstehen sehr gleichmäßige Schichten, was sich später in einer geringeren Streubreite der Dicke der gemahlenen Pigmentpartikel äußert. Diese Pigmente zeigen in Lacken eine bessere Orientierung und eine glattere Oberfläche.

Die erfindungsgemaßen Pigmente lassen sich in verschiedene Überzugsmittel einarbeiten. Solche Uberzugsmittel enthalten

- ein oder mehrere erfindungsgemäße Pigmente,
- ein oder mehrere lackübliche Bindemittel,

- gegebenenfalls weitere Pigmente oder Farbstoffe
- gegebenenfalls ein oder mehrere Vernetzer, gegebenenfalls lackübliche Additive und/oder Füllstoffe.

Als lackübliche Bindemittel können z.B. Polyester, Alkydharze, Polyurethane, (Meth)acrylcopolymerisate und Harze auf Celluloseesterbasis in den Überzugsmitteln enthalten sein. Diese können in organischen Lösungsmitteln gelöst oder dispergiert sein.

Als weitere Pigmente können beliebige organische und/oder anorganische Pigmente, wie sie in Lacken üblicherweise eingesetzt werden, enthalten sein. Beispiele für solche Pigmente sind Titandioxid, Eisenoxid, Ruß, Azopigmente, Phthalocyaninpigmente, Perylenpigmente, Chinacridon- oder Pyrrolopyrrolpigmente.

Als weitere plättchenformige Effektpigmente kommen die üblichen Metallpigmente, z.B. aus Aluminium oder Kupfer und die metalloxidbeschichteten Metallpigmente, andere Effektpigmente, wie z.B. Perlglanz- und Interferenzpigmente, wie z.B. beschichteter Glimmer, metalloxidbeschichtetes Aluminium, Nitrotitandioxid und Graphiteffektpigmente, plättchenförmiges Eisenoxid (micaceous iron oxide), Molybdändisulfidpigmente, plättchenförmige Kupferphthalocyaninpigmente, Bismutoxidchloridplattchen und beschichtete Glasflakes in Betracht. Die mischoxidbeschichteten Aluminium- und Glimmerpigmente konnen mit organischen Pigmenten belegt sein.

Auch lackübliche vernetzte oder unvernetzte Polymerimikroteilchen können in dem Überzugsmittel enthalten sein.

Als Füllstoffe können alle in der Lackbereitung üblichen Füllstoffe enthalten sein. Bevorzugt sind Siliciumdioxid, Bariumsulfat und Talkum.

Als Farbstoffe kann das Überzugsmittel alle in der Lackbereitung üblichen Farbstoffe enthalten. Bevorzugt sind Farbstoffe, die einen Farbton eines der Interferenzfarbtöne aufweisen.

Als Vernetzer kann das Überzugsmittel z.B. Formaldehydkondensationsharze, wie Phenol-Formaldehydkondensationsharze und Amin-Formaldehydkondensationsharze oder Polyisocyanate enthalten. Auch die oben bereits erwähnten Reaktivverdünner können als Vernetzer zugesetzt werden.

Als lackübliche Additive können alle dem Fachmann vertrauten Additive in den Überzugsmitteln enthalten sein wie hochdisperse Kieselsäure, Schichtsilikate, polymere Harnstoffverbindungen, Celluloseether wie Hydroxyethylcellulose, Methylcellulose, Carboxymethylcellulose, Polyvinylalkohol, Poly(meth)acrylate und -acrylamide, Polyvinylpyrrolidon und weitere hydrophile und hydrophobe Polymere und Copolymere, Verlaufshilfsmittel, Lichtschutzmittel, Antischaummittel, Netzmittel sowie Haftvermittler.

Weiterhin kommen als lackübliche Additive Polymerisationsinitiatoren und Polymerisationskatalysatoren in Betracht.

Die Überzugsmittel können auch ein oder mehrere organische Lösungsmittel enthalten. Als Lösungsmittel kommen z.B. ein- oder mehrwertige Alkohole wie Propanol, Butanol und Hexanol, Glykolether und -ester wie Diethylenglykoldialkylether, Glykole wie Ethylen- oder Propylenglykol, Ketone wie Methylethylketon oder Aceton, Ester wie Ethyl- und Butylacetat sowie aromatische und aliphatische Kohlenwasserstoffe in Betracht.

Bevorzugt sind Überzugsmittel, die Wasser als Verdünnungsmittel enthalten. In diesen wässrigen Überzugsmitteln sind mit Wasser verträgliche Bindemittel und Additive enthalten, wie sie dem Fachmann geläufig sind. So werden für diese Uberzugsmittel z.B. wasserlösliche Bindemittel mit anionischen oder kationischen Gruppen verwendet.

Bevorzugt sind anionisch stabilisierte Bindemittel auf Polyester-, (Meth)acrylcopolymer- oder, besonders bevorzugt, Polyurethanbasis.

Besonders bevorzugt ist die Anwendung der erfindungsgemäßen Pigmente als Bestandteil von Zweischichtlackierungen des "Basecoat-Clearcoat"-Typs, wie sie sich für Effektlackierungen durchgesetzt haben.

"Basecoat/Clearcoat"-Lackierungen werden hergestellt, indem man nach Vorlackierung eines pigmentierten, bevorzugt eines dunkel pigmentierten Basislackes, bevorzugt im Naß-in-naß-Verfahren, d.h. nach einer kurzen Ablüftzeit ohne Einbrennschritt, z.B. bei 20-80°C, die Basislackschichten mit einem üblichen Klarlack in einer Trockenschichtdicke von 30-80 µm überlackiert und anschließend Basislack und Klarlack zusammen bei Temperaturen von 20-140°C trocknet oder vernetzt.

Die Trocknungsbedingungen der Decklackschicht (Basislack und Klarlack) richten sich nach dem verwendeten Klarlacksystem. Für die Original(Serien-)Lackierung liegen im allgemeinen die Temperaturen bei über 80°C für Zweikomponenten-Klarlacke, bevorzugt bei über 120°C für Einkomponenten-Klarlacke. Für die mit Zweikomponenten-Klarlacken auf Basis von Polyisocyanaten ausgeführte Ausbesserungslackierung liegen die Aushärtungstemperaturen bei Raumtemperatur bzw. Temperaturen, die 80°C nicht übersteigen.

Als Klarlacke sind alle üblichen Klarlacke oder transparent pigmentierten oder eingefärbten (tinted clearcoats) Überzugslacke geeignet.

Besonders geeignet sind konventionelle/losungsmittelhaltige Einoder Zweikomponenten High-Solids-Lacke, wasserverdünnbare Klarlacke oder Pulverklarlacke.

Die erfindungsgemäßen Pigmente werden bevorzugt in Lacken, Tinten, Druckfarben und Dispersionsfarben verwendet.

Die erfindungsgemäßen Überzugsmittel eignen sich besonders zur Beschichtung, insbesondere zur Lackierung von Substraten. Als Substrate konnen u.a. verwendet werden metallische, Papier-, Holz- oder Kunststoffuntergründe. Diese sind häufig vorbeschichtet oder vorbedruckt.

Übliche Vorbeschichtungen für metallische Substrate sind Zink-Phosphatierung, Elektrotauchlackierung und gegebenenfalls eine oder mehrere gespritzte Lackschichten, wie z.B. eine Füller (primer-surfacer)-Schicht oder auch unifarbene Basis- oder Decklackschicht.

Diese Schichten sind im allgemeinen ausgehärtet. Bevorzugt sind dunkle pigmentierte Schichten. Kunststoffsubstrate können mit einer Kunststoffgrundierung, bevorzugt eine dunkle Kunststoffgrundierung, versehen sein.

Die erfindsungsgemäßen Überzugsmittel kommen besonders zur Beschichtung bzw. Lackierung von Gebrauchsgegenständen in Betracht. Besonders interessant erschienen die Farbeffekte auf Schmuck, Verpackungsmaterial, Flaschen, Haushaltsgegenständen, sowie besonders auf Fahrzeugen wie Fahrrädern, Motorrädern und ganz besonders auf Automobilen.

Beispiel 1

Herstellung von cholesterisch flüssigkristallinen Pigmenten, enthaltend Celluloseacetobutyrat

Eine polymerisierbare Mischung wurde hergestellt aus

- jeweils 7,9 Gew.-% der folgenden flüssigkristallinen Monomeren:

| |
|---|
| 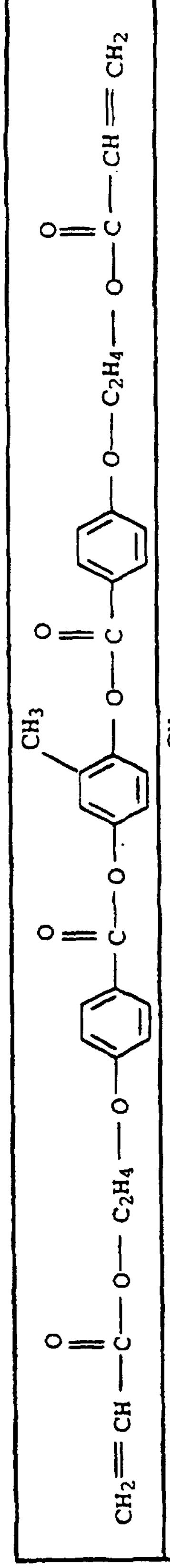 |
| 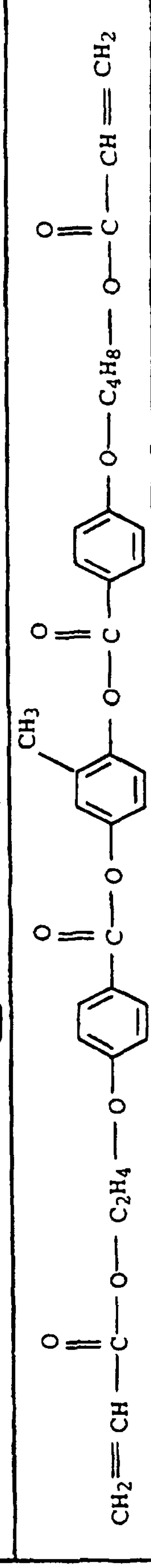 |
| 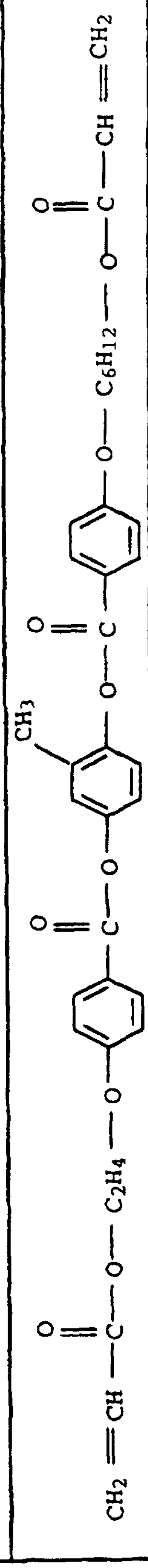 |
| 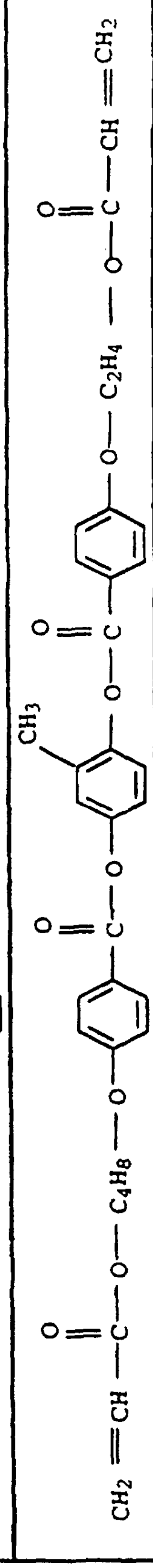 |
| 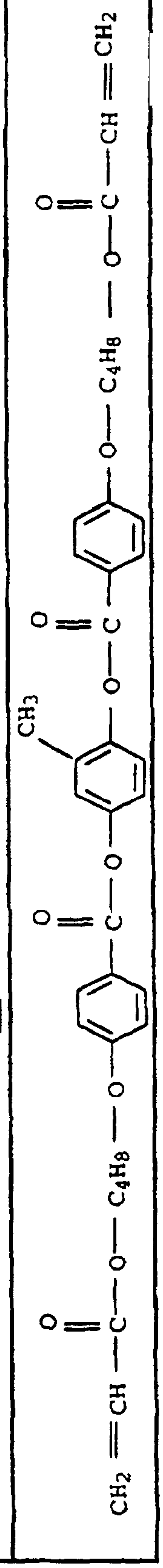 |

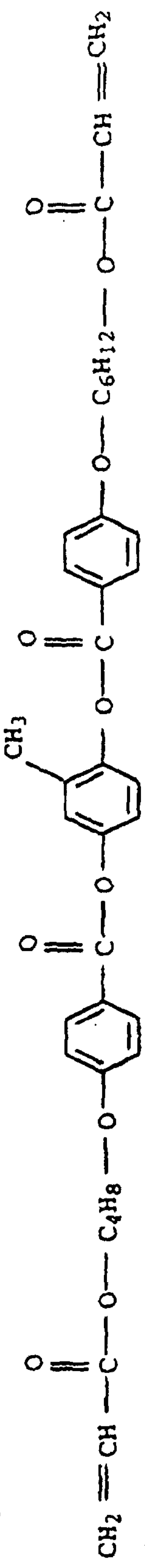

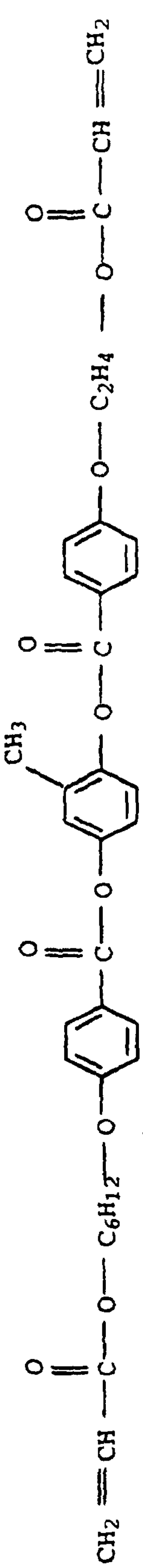

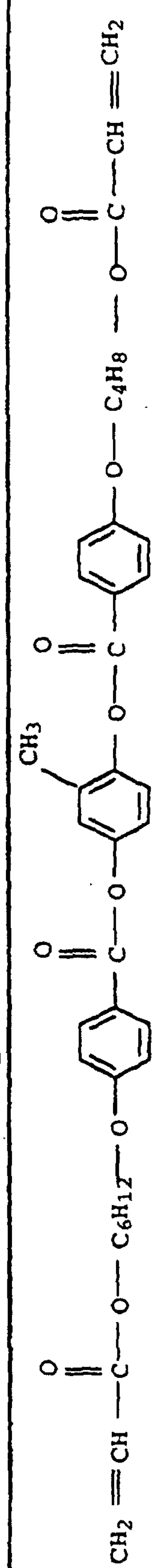

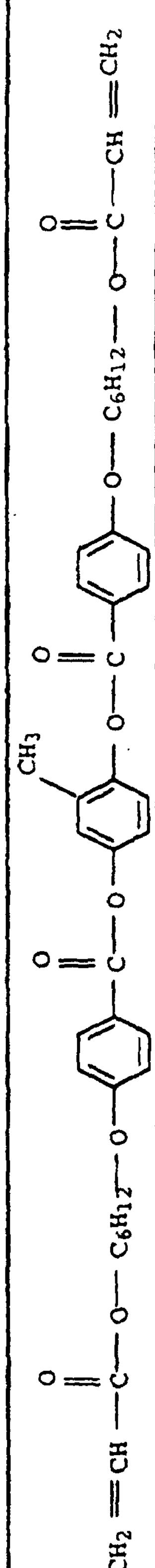

(Die Herstellung der Monomeren ist in der älteren deutschen Patentanmeldung 19 532 408.0 beschrieben),

- 4,5 Gew.-% des folgenden chiralen Dotierstoffs

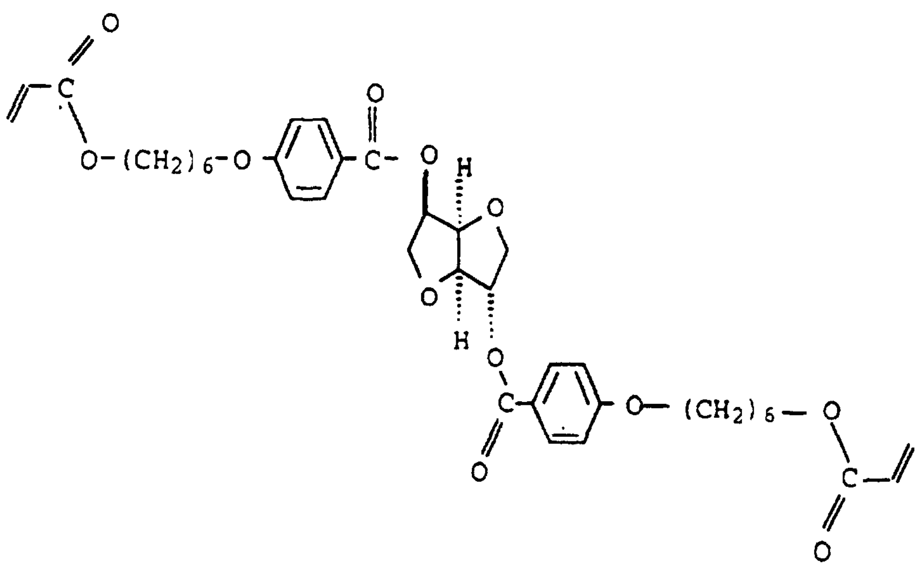

(Die Herstellung des Dotierstoffs ist in der älteren deutschen Patentanmeldung P 43 42 280.2 beschrieben),

- 1,9 Gew.-% eines handelsüblichen Polymerisationsinitiators (Lucirin® TPO, Hersteller BASF, Ludwigshafen),
- 0,6 Gew.-% Celluloseacetobutyrat und
- 19,9 Gew.-% Tetrahydrofuran.

(Die Gew.-%-Angaben beziehen sich auf die Gesamtmenge der polymerisierbaren Mischung).

Die Mischung wurde mittels einer Spiralrakel (Schichtdicke 4 µm) auf einen Glastrager aufgerakelt. Nach Verdunstung des Lösungsmittels wurde durch UV-Licht (Wellenlänge 360 nm, 160 W/cm) polymerisiert. Die gehärtete Schicht wurde mechanisch vom Träger abgelöst und die Schicht in einer Analysenmühle (Typ A10, Firma IKA) zermahlen und durch einen Siebsatz getrennt. Die erhaltenen Pigmentpartikel wiesen einen maximalen Durchmesser von ca. 80µm und eine Dicke von 4 bis 6 µm auf.

Beispiel 2

Vergleichsbeispiel: Herstellung von cholestrisch flüssigkristallinen Pigmenten ohne Celluloseacetobutyrat.

Analog zu Beispiel 1 wurden Pigmente ohne Celluloseacetobutyrat hergestellt. Die erhaltenen Pigmentpartikel weisen einen maximalen Durchmesser von 80 µm und eine breitere Streuung der Dicke von ca. 4 bis 50 µm auf.

Beispiel 3

Herstellung der erfindungsgemäßen Überzugsmittel

10 Gew.-% der in Beispiel 1 beschriebenen Pigmente wurden mit 90 Gew.-% eines handelsüblichen unpigmentierten Basislacks auf der Basis gesättigter Polyester, Cellulosederivat und Aminoharze zu einer homogenen Mischung formuliert.

Die so erhaltene Mischung wurde mit einem Gemisch aus 50 Vol.-% Butylacetat und 50 Vol.-% Xylol auf eine Spritzviskosität von 18 Sekunden DIN4 eingestellt. Der Festkörpergehalt des Basislakkes betrug 20 Gew.-%.

Der Lack zeigte eine brillante Farbe mit einer Reflexionswellenlänge von 530 nm und stark ausgeprägtem Farbflopp. Die Oberfläche war homogen.

Beispiel 4

Vergleichsbeispiel: Überzugsmittel mit Pigmenten gemäß Beispiel 2.

Analog zu Beispiel 3 wurde eine Lackschicht mit den Pigmenten des Vergleichsbeispiels 2 hergestellt. Der Farbeindruck der Schicht war weniger brillant, die Oberfläche der Schicht etwas rauh.

Beispiel 5

Herstellung einer Mehrschichtlackierung des Basecoat-Clearcoat-Typs

a) Verwendete Klarlacke

Als Serienklarlack wurde der handelsübliche Einbrennüberzugslack (FF92-0130, BASF L+F AG) auf Basis Acrylharz, Aminoharz verwendet.

Als Ausbesserungsklarlack wurde ein handelsüblicher Zweikomponenten-High-Solids-Glassodur-Klarlack (923-54) mit Zweikomponenten-High-Solids-Glassodur-Härter (929-71) und Verdünner (352-91) der Fa. BASF L+F AG verwendet.

b) Herstellung der Zweischichtlackierung

Das gemäß Beispiel 3 hergestellte Überzugsmittel wurde auf eine in üblicher Weise mit Zink-Phosphatierung, Elektrotauchlack und Spritzgrund vorbehandeltes Blech mit Hilfe einer Druckluft zerstäubenden Spritzpistole so aufgetragen, daß eine Gesamttrockenfilmstärke von 15 bis 30 µm erreicht wurde. Die Applikation erfolgte bei 23°C Umgebungstemperatur und 60 % relativer Luftfeuchtigkeit.

Nach der Applikation des Basislackes wurde dieser 30 Minuten bei Umgebungstemperatur abgelüftet.

Danach wurde mit den oben beschriebenen Klarlacken überschichtet. Im Falle des Einkomponenten-Serienklarlackes wurde 30 Minuten bei 130°C, beim Zweikomponenten-Reparatur Klarlack wurde 20 Minuten bei 80°C eingebrannt.

## Patentansprüche

### Patentansprüche für folgende Vertragsstaaten : AT, PT

1. Verfahren zur Herstellung von Pigmenten durch Auftragen einer polymerisierbaren Mischung auf eine Oberfläche, Orientierung der in der Mischung enthaltenen Flüssigkristalle, Polymerisation der Mischung, Ablösen des Polymerfilms von der Oberfläche und Zerkleinern des Polymerfilms zu Pigmentpartikeln, **dadurch gekennzeichnet, daß** die polymerisierbare Mischung folgende Komponenten enthält:

   $a_{1)}$ mindestens ein chirales flüssigkristallines polymerisierbares Monomeres oder

   $a_{2)}$ mindestens ein achirales flüssigkristallines polymerisierbares Monomeres und eine chirale Verbindung und zusätzlich

   b) ein polymeres Bindemittel und/oder monomere Verbindungen, die durch Polymerisation in ein polymeres Bindemittel überführt werden können und/oder ein Dispergierhilfsmittel.

2. Verfahren nach Anspruch 1, **dadurch gekennzeichnet, daß** man als Komponente b) ein polymeres Bindemittel einsetzt.

3. Verfahren nach Anspruch 2, **dadurch gekennzeichnet, daß** man als polymeres Bindemittel Celluloseacetobutyrat einsetzt.

4. Verfahren nach Anspruch 1, **dadurch gekennzeichnet, daß** man als Komponente b) ein Dispergierhilfsmittel einsetzt.

5. Verfahren nach Anspruch 4, **dadurch gekennzeichnet, daß** man als Dispergierhilfsmittel ein Derivat der Polyisobutylen-Bernsteinsäure einsetzt.

**6.** Verfahren nach Anspruch 1, **dadurch gekennzeichnet, daß** man als Komponente $a_{1)}$ mindestens ein chirales flüssigkristallines polymerisierbares Monomeres der allgemeinen Formel I

$$[Z^1-Y^1-A^1-Y^2-M^1-Y^3-]_n X \qquad I$$

einsetzt, in der die Variablen die folgende Bedeutung haben:

$Z^1$ eine polymerisierbare Gruppe oder ein Rest, der eine polymerisierbare Gruppe trägt,

$Y^1,Y^2,Y^3$ chemische Bindungen, Sauerstoff, Schwefel,

$$-CO-O-, -O-CO-, -O-CO-O-,$$

$$-CO-N(R)- \text{ oder } -N(R)-CO- ,$$

$A^1$ ein Spacer,

$M^1$ eine mesogene Gruppe,

X ein n-wertiger chiraler Rest,

R Wasserstoff oder $C_1$-$C_4$-Alkyl,

n 1 bis 6

wobei die Reste $Z^1$, $Y^1$, $Y^2$, $Y^3$, $A^1$ und $M^1$, gleich oder verschieden sein können.

**7.** Verfahren nach Anspruch 1, **dadurch gekennzeichnet, daß** die Komponente $a_2$) mindestens ein achirales flüssigkristallines polymerisierbares Monomeres der allgemeinen Formel II

$$Z^2-Y^4-A^2-Y^5-M^2-Y^6-A^3-Y^7-Z^3 \qquad II$$

enthält, in der die Variablen die folgende Bedeutung haben:

$Z^2,Z^3$ polymerisierbare Gruppen oder Reste, die eine polymerisierbare Gruppe enthalten

$Y^4,Y^5,Y^6,Y^7$ chemische Bindungen, Sauerstoff, Schwefel,

$$-CO-O-, -O-CO-, -O-CO-O-,$$

$$-CO-N(R)- \text{ oder } -N(R)-CO- .$$

$A^2,A^3$ Spacer und

$M^2$ eine mesogene Gruppe.

**8.** Verfahren nach Anspruch 1, **dadurch gekennzeichnet, daß** die Komponente $a_2$) eine chirale Verbindung der allgemeinen Formel Ia

$$\left[Z^1-Y^1-A^1-Y^2-M^a-Y^3-\right]_n X \qquad \text{Ia}$$

enthält, in der $Z^1$, $Y^1$, $Y^2$, $Y^3$, $A^1$, X und n die oben angegebene Bedeutung haben und $M^a$ ein zweiwertiger Rest ist, der mindestens ein hetero- oder isocyclisches Ringsystem enthält.

**9.** Pigmente, erhältlich nach einem Verfahren gemäß den Ansprüchen 1 bis 8.

**10.** Überzugsmittel, enthaltend

- ein oder mehrere Pigmente gemäß Anspruch 9
- ein oder mehrere lackübliche Bindemittel
- gegebenenfalls weitere Pigmente oder Farbstoffe
- gegebenenfalls ein oder mehrere Vernetzer
- gegebenenfalls lackübliche Additive und/oder Füllstoffe.

**11.** Überzugsmittel nach Anspruch 10, enthaltend als lackübliche Bindemittel solche auf Polyester-, Alkydharz-, Polyurethan-, (Meth)acrylcopolymerisat- und/oder Celluloseesterbasis.

**12.** Überzugsmittel nach Anspruch 10, enthaltend als lackübliche Bindemittel wasserverdünnbare, anionisch stabilisierte Harze.

**13.** Verwendung von Pigmenten gemäß Anspruch 9 in Lacken, Tinten und Druckfarben.

**14.** Verwendung von Pigmenten gemäß Anspruch 9 in Dispersionsfarben.

**15.** Verwendung der Überzugsmittel gemäß den Ansprüchen 10 bis 12 zur Beschichtung von Gebrauchsgegenständen.

**16.** Verwendung der Überzugsmittel gemäß den Ansprüchen 10 bis 12 zur Lackierung von Fahrzeugen.

**17.** Fahrzeuge, lackiert mit einem Überzugsmittel gemäß den Ansprüchen 10 bis 12.

**Patentansprüche für folgende Vertragsstaaten : ES, FR, GB, IT, SE**

**1.** Verfahren zur Herstellung von Pigmenten durch Auftragen einer polymerisierbaren Mischung auf eine Oberfläche, Orientierung der in der Mischung enthaltenen Flüssigkristalle, Polymerisation der Mischung, Ablösen des Polymerfilms von der Oberfläche und Zerkleinern des Polymerfilms zu Pigmentpartikeln, **dadurch gekennzeichnet, daß** die polymerisierbare Mischung folgende Komponenten enthält:

$a_{1)}$ mindestens ein chirales flüssigkristallines polymerisierbares Monomeres oder

$a_{2)}$ mindestens ein achirales flüssigkristallines polymerisierbares Monomeres und eine chirale Verbindung und zusätzlich

b) ein polymeres Bindemittel und/oder monomere Verbindungen, die durch Polymerisation in ein polymeres Bindemittel überführt werden können und/oder ein Dispergierhilfsmittel,

ausgenommen zumindest zwei vernetzbare Doppelbindungen enthaltende, farbneutrale Verbindungen als Komponente b).

**2.** Verfahren nach Anspruch 1, **dadurch gekennzeichnet, daß** man als Komponente b) ein polymeres Bindemittel einsetzt.

**3.** Verfahren nach Anspruch 2, **dadurch gekennzeichnet, daß** man als polymeres Bindemittel Celluloseacetobutyrat einsetzt.

**4.** Verfahren nach Anspruch 1, **dadurch gekennzeichnet, daß** man als Komponente b) ein Dispergierhilfsmittel einsetzt.

**5.** Verfahren nach Anspruch 4, **dadurch gekennzeichnet, daß** man als Dispergierhilfsmittel ein Derivat der Polyisobutylen-Bernsteinsäure einsetzt.

**6.** Verfahren nach Anspruch 1, **dadurch gekennzeichnet, daß** man als Komponente $a_{1)}$ mindestens ein chirales flüssigkristallines polymerisierbares Monomeres der allgemeinen Formel I

$$\left[Z^1—Y^1—A^1—Y^2—M^1—Y^3—\right]_n X \qquad \text{I}$$

einsetzt, in der die Variablen die folgende Bedeutung haben:

$Z^1$ eine polymerisierbare Gruppe oder ein Rest, der eine polymerisierbare Gruppe trägt,

$Y^1$,$Y^2$,$Y^3$ chemische Bindungen, Sauerstoff, Schwefel,

$$—CO—O—, —O—CO—, —O—CO—O—,$$

$$—CO—N(R)— \text{ oder } —N(R)—CO—,$$

$A^1$ ein Spacer,

$M^1$ eine mesogene Gruppe,

X ein n-wertiger chiraler Rest,

R Wasserstoff oder $C_1$-$C_4$-Alkyl,

n 1 bis 6

wobei die Reste $Z^1$, $Y^1$, $Y^2$, $Y^3$, $A^1$ und $M^1$, gleich oder verschieden sein können.

**7.** Verfahren nach Anspruch 1, **dadurch gekennzeichnet, daß** die Komponente $a_{2)}$ mindestens ein achirales flüssigkristallines polymerisierbares Monomeres der allgemeinen Formel II

$$Z^2—Y^4—A^2—Y^5—M^2—Y^6—A^3—Y^7—Z^3 \qquad \text{II}$$

enthält, in der die Variablen die folgende Bedeutung haben:

$Z^2$,$Z^3$ polymerisierbare Gruppen oder Reste, die eine polymerisierbare Gruppe enthalten

$Y^4$,$Y^5$,$Y^6$,$Y^7$ chemische Bindungen, Sauerstoff, Schwefel,

$$—CO—O—, —O—CO—, —O—CO—O—,$$

— CO— N(R)— oder — N(R)— CO— .

$A^2$,$A^3$ Spacer und

$M^2$ eine mesogene Gruppe.

**8.** Verfahren nach Anspruch 1, **dadurch gekennzeichnet, daß** die Komponente $a_{2)}$ eine chirale Verbindung der allgemeinen Formel Ia

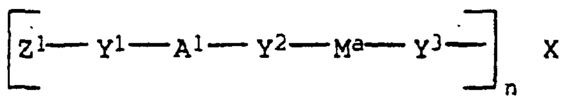

Ia

enthält, in der $Z^1$, $Y^1$, $Y^2$, $Y^3$, $A^1$, X und n die oben angegebene Bedeutung haben und $M^a$ ein zweiwertiger Rest ist, der mindestens ein hetero- oder isocyclisches Ringsystem enthält.

**9.** Pigmente, erhältlich nach einem Verfahren gemäß den Ansprüchen 1 bis 8.

**10.** Überzugsmittel, enthaltend

- ein oder mehrere Pigmente gemaß Anspruch 9
- ein oder mehrere lackübliche Bindemittel
- gegebenenfalls weitere Pigmente oder Farbstoffe
- gegebenenfalls ein oder mehrere Vernetzer
- gegebenenfalls lackübliche Additive und/oder Füllstoffe.

**11.** Überzugsmittel nach Anspruch 10, enthaltend als lackübliche Bindemittel solche auf Polyester-, Alkydharz-, Polyurethan-, (Meth) acrylcopolymerisat- und/oder Celluloseesterbasis.

**12.** Überzugsmittel nach Anspruch 10, enthaltend als lackübliche Bindemittel wasserverdünnbare, anionisch stabilisierte Harze.

**13.** Verwendung von Pigmenten gemäß Anspruch 9 in Lacken, Tinten und Druckfarben.

**14.** Verwendung von Pigmenten gemäß Anspruch 9 in Dispersionsfarben.

**15.** Verwendung der Überzugsmittel gemäß den Ansprüchen 10 bis 12 zur Beschichtung von Gebrauchsgegenständen.

**16.** Verwendung der Überzugsmittel gemäß den Ansprüchen 10 bis 12 zur Lackierung von Fahrzeugen.

**17.** Fahrzeuge, lackiert mit einem Überzugsmittel gemäß den Ansprüchen 10 bis 12.

## Claims

### Claims for the following Contracting States : AT, BE, CH, LI, DE, DK, FI, GR, IG, LU, ML, NL, P

**1.** A process for preparing pigments by applying a polymerizable mixture to a surface, orienting the liquid crystals present in the mixture, polymerizing the mixture, detaching the polymer film from the surface and comminuting the polymer film to form pigment particles, wherein the polymerizable mixture comprises:

$a_1$) at least one chiral liquid-crystalline polymerizable monomer or

$a_2$) at least one achiral liquid-crystalline polymerizable monomer and a chiral compound, and additionally

b) a polymeric binder and/or monomeric compounds which can be converted by polymerization into a polymeric binder and/or a dispersion auxiliary.

**2.** A process as claimed in claim 1, wherein a polymeric binder is employed as component b).

**3.** The process as claimed in claim 2, wherein the polymeric binder employed is cellulose acetobutyrate.

**4.** The process as claimed in claim 1, wherein a dispersion auxiliary is employed as component b).

**5.** A process as claimed in claim 4, wherein the dispersion auxiliary employed is a polyisobutylene succinic acid derivative.

**6.** A process as claimed in claim 1, wherein component $a_{1)}$ comprises at least one chiral liquid-crystalline polymerizable monomer of the general formula I

$$\left[ Z^1 - Y^1 - A^1 - Y^2 - M^1 - Y^3 - \right]_n X \qquad \text{I}$$

where

| | |
|---|---|
| $Z^1$ | is a polymerizable group or a radical which carries a polymerizable group, |
| $Y^1$,$Y^2$,$Y^3$ | are chemical bonds, oxygen, sulfur, |

$$-CO-O-, -O-CO-, -O-CO-O-,$$

$$-CO-N(R)- \text{ or } -N(R)-CO- ,$$

| | |
|---|---|
| $A^1$ | is a spacer, |
| $M^1$ | is a mesogenic group, |
| X | is an n-valent chiral radical, |
| R | is hydrogen or $C_1$-$C_4$-alkyl, and |
| n | is 1 to 6, |

it being possible for the radicals $Z^1$, $Y^1$, $Y^2$, $Y^3$, $A^1$ and $M^1$ to be identical or different.

**7.** A process as claimed in claim 1, wherein component $a_2$) comprises at least one achiral liquid-crystalline polymerizable monomer of the general formula II

$$Z^2-Y^4-A^2-Y^5-M^2-Y^6-A^3-Y^7-Z^3 \qquad \text{II}$$

where

| | |
|---|---|
| $Z^2$ and $Z^3$ | are polymerizable groups or radicals containing a polymerizable group, |

$Y^4, Y^5, Y^6, Y^7$ are chemical bonds, oxygen, sulfur,

$$-CO-O-, -O-CO-, -O-CO-O-,$$

$$-CO-N(R)- \text{ or } -N(R)-CO-,$$

$A^2$ and $A^3$ are spacers, and

$M^2$ is a mesogenic group.

**8.** A process as claimed in claim 1, wherein component $a_2$) comprises a chiral compound of the general formula Ia

$$[Z^1-Y^1-A^1-Y^2-M^a-Y^3-]_n X \qquad \text{Ia}$$

where $Z^1$, $Y^1$, $Y^2$, $Y^3$, $A^1$, X and n are as defined above and $M^a$ is a divalent radical containing at least one heterocyclic or isocyclic ring system.

**9.** A pigment obtainable via a process as claimed in any of claims 1 to 8.

**10.** A coating composition comprising

- one or more pigments as claimed in claim 9,
- one or more customary paint binders,
- if desired, further pigments or dyes,
- if desired, one or more crosslinkers, and
- if desired, customary paint additives and/or fillers.

**11.** A coating composition as claimed in claim 10, comprising as customary paint binders those based on polyesters, alkyd resins, polyurethanes, (meth)acrylic copolymers and/or cellulose esters.

**12.** A coating composition as claimed in claim 10, comprising as customary paint binders water-dilutable, anionically stabilized resins.

**13.** The use of a pigment as claimed in claim 9 in inks, including printing inks, and surface coatings.

**14.** The use of a pigment as claimed in claim 9 in emulsion paints.

**15.** The use of a coating composition as claimed in any of claims 10 to 12 for coating commodity articles.

**16.** The use of a coating composition as claimed in any of claims 10 to 12 for painting vehicles.

**17.** A vehicle coated with a coating composition as claimed in any of claims 10 to 12.

**Claims for the following Contracting States : ES, FR, GB, IT, SE**

**1.** A process for preparing pigments by applying a polymerizable mixture to a surface, orienting the liquid crystals present in the mixture, polymerizing the mixture, detaching the polymer film from the surface and comminuting the polymer film to form pigment particles, wherein the polymerizable mixture comprises:

$a_1$) at least one chiral liquid-crystalline polymerizable monomer or

$a_2$) at least one achiral liquid-crystalline polymerizable monomer and a chiral compound, and additionally

b) a polymeric binder and/or monomeric compounds which can be converted by polymerization into a polymeric binder and/or a dispersion auxiliary,

with the exception of color-neutral compounds comprising at least two crosslinkable double bonds as component b).

**2.** A process as claimed in claim 1, wherein a polymeric binder is employed as component b).

**3.** The process as claimed in claim 2, wherein the polymeric binder employed is cellulose acetobutyrate.

**4.** The process as claimed in claim 1, wherein a dispersion auxiliary is employed as component b).

**5.** A process as claimed in claim 4, wherein the dispersion auxiliary employed is a polyisobutylene succinic acid derivative.

**6.** A process as claimed in claim 1, wherein component $a_{1)}$ comprises at least one chiral liquid-crystalline polymerizable monomer of the general formula I

$$\left[ Z^1 - Y^1 - A^1 - Y^2 - M^1 - Y^3 - \right]_n X \qquad \mathrm{I}$$

where

Z¹ is a polymerizable group or a radical which carries a polymerizable group,

$Y^1$,$Y^2$,$Y^3$ are chemical bonds, oxygen, sulfur,

$$-CO-O-, -O-CO-, -O-CO-O-,$$

$$-CO-N(R)- \text{ or } -N(R)-CO-,$$

$A^1$ is a spacer,

$M^1$ is a mesogenic group,

X is an n-valent chiral radical,

R is hydrogen or $C_1$-$C_4$-alkyl, and

n is 1 to 6,

it being possible for the radicals $Z^1$, $Y^1$, $Y^2$, $Y^3$, $A^1$ and $M^1$ to be identical or different.

**7.** A process as claimed in claim 1, wherein component $a_2$) comprises at least one achiral liquid-crystalline polymerizable monomer of the general formula II

$$Z^2-Y^4-A^2-Y^5-M^2-Y^6-A^3-Y^7-Z^3 \qquad \mathrm{II}$$

where

$Z^2$ and $Z^3$ are polymerizable groups or radicals containing a polymerizable group,

$Y^4, Y^5, Y^6, Y^7$ are chemical bonds, oxygen, sulfur,

$$-CO-O-,\ -O-CO-,\ -O-CO-O-,$$

$$-CO-N(R)- \text{ or } -N(R)-CO-,$$

$A^2$ and $A^3$ are spacers, and

$M^2$ is a mesogenic group.

**8.** A process as claimed in claim 1, wherein component $a_2$) comprises a chiral compound of the general formula Ia

$$\left[Z^1-Y^1-A^1-Y^2-M^a-Y^3-\right]_n X \qquad \text{Ia}$$

where $Z^1$, $Y^1$, $Y^2$, $Y^3$, $A^1$, X and n are as defined above and $M^a$ is a divalent radical containing at least one heterocyclic or isocyclic ring system.

**9.** A pigment obtainable via a process as claimed in any of claims 1 to 8.

**10.** A coating composition comprising

- one or more pigments as claimed in claim 9,
- one or more customary paint binders,
- if desired, further pigments or dyes,
- if desired, one or more crosslinkers, and
- if desired, customary paint additives and/or fillers.

**11.** A coating composition as claimed in claim 10, comprising as customary paint binders those based on polyesters, alkyd resins, polyurethanes, (meth)acrylic copolymers and/or cellulose esters.

**12.** A coating composition as claimed in claim 10, comprising as customary paint binders water-dilutable, anionically stabilized resins.

**13.** The use of a pigment as claimed in claim 9 in inks, including printing inks, and surface coatings.

**14.** The use of a pigment as claimed in claim 9 in emulsion paints.

**15.** The use of a coating composition as claimed in any of claims 10 to 12 for coating commodity articles.

**16.** The use of a coating composition as claimed in any of claims 10 to 12 for painting vehicles.

**17.** A vehicle coated with a coating composition as claimed in any of claims 10 to 12.

**Revendications**

**Revendications pour les Etats contractants suivants : AT, BE, CH, LI, DE, DK, FI, GR, IG, LU, ML, NL, P**

**1.** Procédé de production de pigments par application d'un mélange polymérisable sur une surface, orientation des

cristaux liquides contenus dans le mélange, polymérisation du mélange, décollement du film de polymère, de la surface, et broyage du film de polymère en particules de pigment, **caractérisé en ce que** le mélange polymérisable contient les composants suivants:

$a_1$) au moins un monomère polymérisable à cristaux liquides chiral ou

$a_2$) au moins un monomère polymérisable à cristaux liquides chiral et une combinaison chirale et en outre,

b) un liant polymère et/ou des combinaisons de monomères qui peuvent être transformées par polymérisation en un liant polymère et/ou un adjuvant de dispersion.

**2.** Procédé selon la revendication 1, **caractérisé en ce que** l'on utilise comme composant b) un liant polymère.

**3.** Procédé selon la revendication 2, **caractérisé en ce que** l'on utilise comme liant polymère de l'acétobutyrate de cellulose.

**4.** Procédé selon la revendication 1, **caractérisé en ce que** l'on utilise comme composant b) un adjuvant de dispersion.

**5.** Procédé selon la revendication 4, **caractérisé en ce que** l'on utilise comme agent de dispersion un dérivé de l'acide polyisobutylène succinique.

**6.** Procédé selon la revendication 1, **caractérisé en ce que** l'on utilise, comme composant $a_1$, au moins un monomère polymérisable à cristaux liquides chiral de formule générale I,

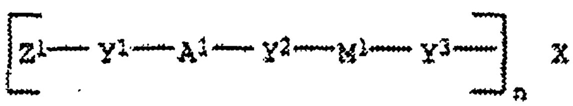 I

dans laquelle les variables ont la signification suivante:

| | |
|---|---|
| $Z^1$ | un groupe polymérisable ou un reste qui porte un groupe polymérisable |
| $y^1$,$y^2$,$y^3$ | liaisons chimiques, l'oxygène, le soufre |

—CO—O—, —O—CO—, —O—CO—O—,

—CO—N(R)— oder —N(R)—CO— ,

| | |
|---|---|
| $A^1$ | un espaceur |
| $M^1$ | un groupe mésogène |
| x | un reste chiral de valence n |
| R | l'hydrogène ou un alkyle en $C_1$-$C_4$ |
| n | 1 à 6 |

les restes $Z^1$, $Y^1$, $Y^2$, $Y^3$, $A^1$ et $M^1$ pouvant être identiques ou différents.

**7.** Procédé selon la revendication 1, **caractérisé en ce que** le composant $a_2$) contient au moins un monomère polymérisable à cristaux liquides, chiral, de formule générale II

$$Z^2—Y^4—A^2—Y^5—M^2—Y^6—A^3—Y^7—Z^3 \qquad II$$

dans laquelle les variables ont la signification suivante:

| | |
|---|---|
| $Z^2$,$Z^3$ | groupes polymérisables ou restes qui contiennent un groupe polymérisable. |
| $Y^4$,$Y^5$,$Y^6$, $Y^7$ | liaisons chimiques, l' oxygène, le soufre |

$$—CO—O—,—O—CO—,—O—CO—O,$$

$$—CO—N(R)— \text{ oder } —N(R)—CO— ,$$

| | |
|---|---|
| $A^2$, $A^3$ | un espaceur et |
| $M^2$ | un groupe mésogène. |

**8.** Procédé selon la revendication 1, **caractérisé en ce que** le composant $a_2$ contient une combinaison chirale de formule générale la

$$\left[Z^1—Y^1—A^1—Y^2—M^a—Y^3\right]_n X \qquad Ia$$

dans laquelle $Z^1$,$Y^1$, $Y^2$, $Y^3$, $A^1$, X et n ont la signification ci-dessus indiquée et $M^a$ est un reste bivalent qui contient au moins un système cyclique hétéro ou isocyclique.

**9.** Pigments pouvant être obtenus par un procédé selon les revendications 1 à 8

**10.** Produits de revêtement contenant:

- un ou plusieurs pigments selon la revendication 9
- un ou plusieurs liants couramment utilisés dans le domaine des peintures
- le cas échéant, d'autres pigments ou d'autres colorants
- le cas échéant, un ou plusieurs agents de réticulation
- le cas échéant, des additifs et/ou des charges couramment utilisés dans le domaine des peintures

**11.** Produits de revêtement selon la revendication 10, contenant, comme liants courant dans le domaine des peintures, des liants à base de copolymères à base de polyesters, de résines alkydes, de polyuréthanne (méth)acrylique et/ou d'esters de cellulose.

**12.** Produits de revêtement selon la revendication 10 contenant, comme liants courants dans le domaine des peintures, des résines anioniquement stabilisées, diluables à l'eau.

**13.** Utilisation de pigments selon la revendication 9 dans les peintures, les encres et les encres d'imprimerie.

**14.** Utilisation de pigments selon la revendication 9 dans les peintures en dispersions.

**15.** Utilisation des produits de revêtements selon les revendications 10 à 12 pour le revêtement d'objets d'utilisation courante.

**16.** Utilisation des produits de revêtements selon les revendications 10 à 12 pour la peinture de véhicules.

**17.** Véhicules peints avec un produit de revêtement selon les revendications 10 à 12.

**Revendications pour les Etats contractants suivants : ES, FR, GB, IT, SE**

**1.** Procédé de production de pigments par application d'un mélange polymérisable sur une surface, orientation des cristaux liquides contenus dans le mélange, polymérisation du mélange, décollement du film de polymère, de la surface, et broyage du film de polymère en particules de pigment, **caractérisé en ce que** le mélange polymérisable contient les composants suivants:

$a_1$) au moins un monomère polymérisable à cristaux liquides chiral ou

$a_2$) au moins un monomère polymérisable à cristaux liquides chiral et une combinaison chirale et en outre,

b) un liant polymère et/ou des combinaisons de monomères qui peuvent être transformées par polymérisation en un liant polymère et/ou un adjuvant de dispersion

à l'exception des combinaisons neutres au point de vue couleur, contenant au moins deux doubles-liaisons réticulables en tant que composant b)

**2.** Procédé selon la revendication 1, **caractérisé en ce que** l'on utilise comme composant b) un liant polymère.

**3.** Procédé selon la revendication 2, **caractérisé en ce que** l'on utilise comme liant polymère de l'acétobutyrate de cellulose.

**4.** Procédé selon la revendication 1, **caractérisé en ce que** l'on utilise comme composant b) un adjuvant de dispersion.

**5.** Procédé, selon la revendication 4, **caractérisé en ce que** l'on utilise comme agent de dispersion un dérivé de l'acide polyisobutylène succinique.

**6.** Procédé selon la revendication 1, **caractérisé en ce que** l'on utilise, comme composant $a_1$, au moins un monomère polymérisable à cristaux liquides chiral de formule générale I,

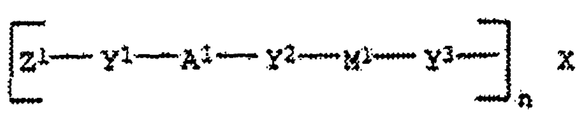
I

dans laquelle les variables ont la signification suivante:

$Z^1$ un groupe polymérisable ou un reste qui porte un groupe polymérisable

$y^1,y^2,y^3$ liaisons chimiques, l'oxygène, le soufre

$$-CO-O-,-O-CO-,-O-CO-O-,$$

$$-CO-N(R)- \text{ oder } -N(R)-CO-,$$

$A^1$ un espaceur

$M^1$ un groupe mésogène

x un reste chiral de valence n

R l'hydrogène ou un alkyle en $C_1$-$C_4$

n 1 à 6

les restes $Z^1$, $Y^1$, $Y^2$, $Y^3$, $A^1$ et $M^1$ pouvant être identiques ou différents.

**7.** Procédé selon la revendication 1, **caractérisé en ce que** le composant $a_2$) contient au moins un monomère polymérisable à cristaux liquides, chiral, de formule générale II

$$Z^2—Y^4—A^2—Y^5—M^2—Y^6—A^3—Y^7—Z^3 \qquad \text{II}$$

dans laquelle les variables ont la signification suivante:

$Z^2$,$Z^3$ groupes polymérisables ou restes qui contiennent un groupe polymérisable.

$Y^4$, $Y^5$, $Y^6$, $Y^7$ liaisons chimiques, l' oxygène, le soufre

$$—CO—O—, —O—CO—, —O—CO—O—,$$

$$—CO—N(R)— \text{ oder } —N(R)—CO—,$$

$A^2$, $A^3$ un espaceur et

$M^2$ un groupe mésogène.

**8.** Procédé selon la revendication 1, **caractérisé en ce que** le composant $a_2$ contient une combinaison chirale de formule générale la

$$\left[Z^1—Y^1—A^1—Y^2—M^a—Y^3—\right]_n X \qquad \text{Ia}$$

dans laquelle $Z^1$,$Y^1$, $Y^2$, $Y^3$, $A^1$, X et n ont la signification ci-dessus indiquée et $M^a$ est un reste bivalent qui contient au moins un système cyclique hétéro ou isocyclique.

**9.** Pigments pouvant être obtenus par un procédé selon les revendications 1 à 8

**10.** Produits de revêtement contenant:

- un ou plusieurs pigments selon la revendication 9
- un ou plusieurs liants couramment utilisés dans le domaine des peintures
- le cas échéant, d'autres pigments ou d'autres colorants
- le cas échéant, un ou plusieurs agents de réticulation
- le cas échéant, des additifs et/ou des charges couramment utilisés dans le domaine des peintures

**11.** Produits de revêtement selon la revendication 10, contenant, comme liants courant dans le domaine des peintures, des liants à base de copolymères à base de polyesters, de résines alkydes, de polyuréthanne (méth)acrylique et/ou d'esters de cellulose.

**12.** Produits de revêtement selon la revendication 10 contenant, comme liants courants dans le domaine des peintures, des résines anioniquement stabilisées, diluables à l'eau.

**13.** Utilisation de pigments selon la revendication 9 dans les peintures, les encres et les encres d'imprimerie.

**14.** Utilisation de pigments selon la revendication 9 dans les peintures en dispersions.

**15.** Utilisation des produits de revêtements selon les revendications 10 à 12 pour le revêtement d'objets d'utilisation courante.

**16.** Utilisation des produits de revêtements selon les revendications 10 à 12 pour la peinture de véhicules.

**17.** Véhicules peints avec un produit de revêtement selon les revendications 10 à 12.